# EUROPEAN PATENT APPLICATION

(11) **EP 1 564 624 A2**
(43) Date of publication of application: **17.08.2005**
(21) Application number: 05250534.4
(22) Date of filing: 01.02.2005
(51) Int. Cl.: G06F 1/00

(54) **Virus protection for multi-function peripherals**

(30) Priority: 10.02.2004 US 776485; 10.02.2004 US 776486
(71) Applicant: Ricoh Company, Ltd., Tokyo 143-8555 (JP)
(72) Inventor: Katano, Seiichi, California 95014-5924 (US)
(74) Representative: Leeming, John Gerard

(57) **Abstract**

A multi-function peripheral includes a virus protection tool that is configured to detect that the multi-function peripheral has been infected by a virus. This may include, for example, determining that one or more unauthorized instructions have been stored on the multi-function peripheral. The virus protection tool may also be configured to perform one or more actions in response to detecting that a multi-function peripheral has been infected with a virus. Example actions include, without limitation, repairing, quarantining or deleting infected data and providing a notification that the multi-function peripheral has been infected and that some action has been performed with respect to the infected data. Other embodiments of the invention include performing virus checks on any data received by an MFP over a network and any data that is provided by the MFP to any other entity over the network and also providing remote virus protection for MFPs over a network.

## Description

The present invention relates to multi-function peripherals. The invention more specifically relates to virus protection for multi-function peripherals.

A multifunction peripheral (MFP) is a single device that performs several functions. Many MFPs are equipped to perform as printers, scanners, facsimile machines, copiers, or any combination thereof. Because they can perform many functions, they are advantageous over their single function counterparts. Moreover, consumers prefer MFPs because purchasing one is often less expensive than purchasing separate devices for each function, e.g., a printer, scanner, facsimile machine, and copier. Because of their usefulness and versatility, MFPs are very common in the workplace.

MFPs often include sophisticated computing architectures with one or more central processing units (CPUs), volatile memory, such as RAM, for storing data and executing processes, and non-volatile storage, such as hard disks, for storing data and programs. These MFPs also include an operating system and one or more application programs to provide various services.

Most MFPs are connected to networks (wired or wireless) so that multiple users can share them. One problem with MFPs being connected to networks is that they are susceptible to viral infection. Viral infection may occur in many ways, depending upon a particular MFP. For example, it is possible for an MFP to be infected during configuration of the MFP if configuration data that is infected with a virus is downloaded to the MFP. As another example, a print job sent to an MFP may be infected with a virus. Once an MFP has been infected, a virus may disrupt the operation of the MFP and in some situations, may completely disable the MFP. Furthermore, an MFP infected with a virus may infect other network elements and MFPs. For example, suppose that an MFP periodically sends status information over a network to a server that collects information from several MFPs at a particular location. In the situation where the MFP is infected with a virus, the status data sent by the MFP to the server may contain the virus, which then infects the server. If the server sends any data to other MFPs, then that data may also be infected with the virus, which in turn, infects the other MFPs in communication with the server. Thus, the infection of even a single MFP can be catastrophic as the virus can adversely affect any number of other MFPs and network devices.

Infected MFPs are traditionally disinfected manually. This may involve administrative personnel connecting a maintenance computer to an infected MFP and running virus protection software to repair, delete or quarantine infected files. In some situations, an infected MFP may have to be completely reconfigured. This may require, for example, deleting all files on one or more hard disks in the MFP and then reinstalling and reconfiguring the MFP. This process is very labor intensive and time consuming, particularly when a large number of MFPs is infected.

In view of the forgoing, there is a need for an approach for providing virus protection for MFPs that does not suffer from limitations of the prior approaches.

A multi-function peripheral includes a virus protection tool that is configured to detect that the multi-function peripheral has been infected by a virus. This may include, for example, determining that one or more unauthorized instructions have been stored on the multi-function peripheral. The virus protection tool may also be configured to perform one or more actions in response to detecting that a multi-function peripheral has been infected with a virus. Example actions include, without limitation, repairing, quarantining or deleting infected data and providing a notification that the multi-function peripheral has been infected and that some action has been performed with respect to the infected data. Other embodiments of the invention include performing virus checks on any data received by an MFP over a network and any data that is provided by the MFP to any other entity over the network and also providing remote virus protection for MFPs over a network.

The present invention is illustrated by way of example, and not by way of limitation, in the figures of the accompanying drawings and in which like reference numerals refer to similar elements and in which:
FIG. 1 is a block diagram that depicts various computing architecture components of a multi-function peripheral (MFP) configured in accordance with an embodiment of the invention.
FIG. 2 is a flow diagram that depicts a summary of various steps performed by an MFP in performing virus protection according to one embodiment of the invention.
FIG. 3 is a block diagram that depicts configuring a virus protection tool through a graphical user interface (GUI).
FIG. 4 is a block diagram that depicts an arrangement for providing virus protection for MFPs remotely.
FIG. 5 is a flow diagram that depicts an approach for providing remote virus protection for an MFP according to an embodiment of the invention.
FIG. 6 is a block diagram of a computer system on which embodiments of the invention may be implemented.

In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention. Various aspects of the invention are described hereinafter in the following sections:
I. OVERVIEW
II. ARCHITECTURE
III. DETECTING VIRAL INFECTION
IV. ACTIONS PERFORMED IN RESPONSE TO DETECTING VIRAL INFECTION
V. RECORDATION AND NOTIFICATION FUNCTIONS PERFORMED IN RESPONSE TO DETECTING VIRAL INFECTION
VI. CONFIGURATION OF VIRUS PROTECTION TOOL
VII. REMOTE VIRUS PROTECTION
VIII.INTRUDER DETECTION AND "CHECK ON SEND"
IX. IMPLEMENTATION MECHANISMS

### I. OVERVIEW

An approach is provided for providing virus protection for multi-function peripherals. According to one embodiment of the invention, a multi-function peripheral includes a virus protection tool that is configured to detect that the multi-function peripheral has been infected by a virus. This may include, for example, determining that one or more unauthorized instructions have been stored on the multi-function peripheral. The virus protection tool may also be configured to perform one or more actions in response to detecting that a multi-function peripheral has been infected with a virus. Example actions include, without limitation, repairing, quarantining or deleting infected data and providing a notification that the multi-function peripheral has been infected and that some action has been performed with respect to the infected data. Other embodiments of the invention include performing virus checks on any data received by an MFP over a network and any data that is provided by the MFP to any other entity over the network.

According to another embodiment of the invention, virus protection for multi-function peripherals is provided remotely via a server configured to provide virus protection. According to this approach, a particular MFP receives a request from a network device for data to be tested. The particular MFP provides the requested data to the network device. The network device performs virus testing on the data provided by the MFP. The network device provides instructions to the MFP, for example, whether to replace the infected data on the MFP with repaired data provided by the network device, or whether to quarantine or delete the infected data. The MFP performs the requested actions and may provide various notifications.

### II. ARCHITECTURE

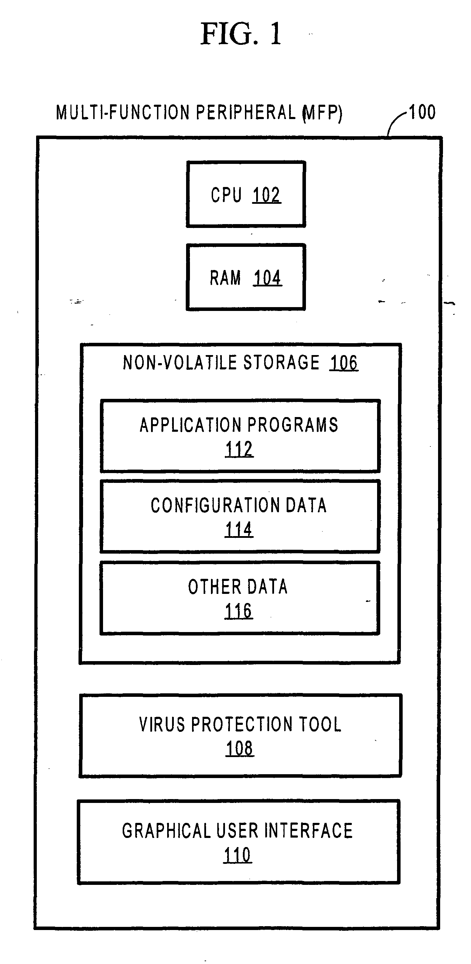

FIG. 1 is a block diagram that depicts various computing architecture components of a multi-function peripheral (MFP) 100 configured in accordance with an embodiment of the invention. MFP 100 includes a central processing unit (CPU) 102, a random access memory (RAM) 104, a non-volatile storage 106, a virus protection tool 108 and a graphical user interface (GUI) 110. MFP 100 may include a wide variety of other components and processes that are not depicted in FIG. 1 for purposes of explanation. For example, MFP 100 may include numerous mechanical components for performing the various functions of MFP 100, such as printing, faxing, copying and scanning. MFP 100 may also include various hardware and software components, for example one or more operating systems, for supporting and performing these and other functions, such as configuration functions. For example, MFP 100 may include hardware and software interfaces for allowing communication between MFP 100 and other devices.

CPU 102 may be implemented by any type and number of processors, depending upon the requirements of a particular implementation, and the invention is not limited to any particular implementation. RAM 104 may be implemented by as one or more volatile memories of any type. RAM 104 is generally configured to store data and instructions that can be processed by CPU 102. For example, RAM 104 may contain data and executable programs to perform the various functions provided by MFP 100.

Non-volatile storage 106 may be implemented by any type and number of non-volatile storage, depending upon the requirements of a particular application, and the invention is not limited to any particular implementation. For example, non-volatile storage 106 may be implemented by one or more hard disks. Non-volatile storage 106 is configured to store data and instructions that can be processed by CPU 102 and/or loaded into RAM 104. For example, non-volatile storage 106 may contain data and executable programs to perform the various functions provided by MFP 100.

112 include any type or number of application programs that may be executed on MFP 100. Examples of application programs 112 include, without limitation, communications programs, configuration programs, as well as other applications for performing the functionality supported by MFP 100. Configuration data 114 includes any data used in the configuration of MFP 100. Examples of other data 116 include, without limitation, temporary data used by application programs 112, status and statistical data for MFP 100, such as page count, levels of consumables and error and fault data, operating system data and data received from other network devices.

Virus protection tool 108 is a mechanism configured generally to provide virus protection functionality to MFP 100 as described in more detail hereinafter. Virus protection tool 108 may be implemented in hardware, computer software, or any combination thereof. Embodiments of the invention are described hereinafter in the context of virus protection tool 108 implemented as a software process for purposes of explanation, but this invention is not limited to this context. As a software process, virus protection tool 108 may include instructions that are stored on non-volatile storage 106, loaded into RAM 104 and then executed by CPU 102. Thus, although depicted separately in FIG. 1 for purposes of explanation, virus protection tool 108 may be stored in RAM 104 and/or non-volatile storage 106.

GUI 110 is configured to visually convey information to a user and may also allow user input. GUI 110 may be implemented in a variety of ways, depending upon the requirements of a particular implementation and the invention is not limited to any particular implementation of GUI 110. For example, GUI 110 may include a LCD or CRT screen for displaying information to a user. GUI 110 may also include a keypad, keyboard, touch screen or other mechanism for allowing a user to input data to MFP 100.

### III. DETECTING VIRAL INFECTION

According to one embodiment of the invention, virus protection tool 108 is configured to detect that MFP 100 has been infected with a virus. Virus protection tool 108 in configured to detect whether any unauthorized instructions have been downloaded to MFP 100. This may include, for example, inspecting any data contained in non-volatile storage 106 as well as data stored in RAM 104 to identify any unauthorized data or instructions, or modification of data that is not consistent with the normal operation of MFP 100.

Virus protection tool 108 may be configured to check for viruses at,different times and frequencies, depending upon the requirements of a particular application. For example, virus protection tool 108 may be configured to periodically, e.g., daily, weekly, monthly, check data contained on MFP 100 to determine whether MFP 100 has been infected with a virus. Virus protection tool 108 may also be configured to perform virus checks at specific times, for example, during the night when virus protection tool 108 is not being used for other functions. Virus protection tool 108 may be configured to execute as a background or foreground process on MFP 100.

MFP 100 may periodically receive data used by virus protection tool 108 to perform its various functions. The data may specify information about new viruses or inoculation techniques that may be used by virus protection tool 108. For example, virus protection tool 108 may periodically receive updated "signature files" that specify attributes about known viruses. The signature files may be periodically provided to MFP 100 from a server over a network.

### IV. ACTIONS PERFORMED IN RESPONSE TO DETECTING VIRAL INFECTION

Virus protection tool 108 is configured to perform one or more actions in response to detecting that MFP 100 has been infected with a virus. For example, virus protection tool 108 may be configured to undo changes made by a virus. This may include restoring data that was changed by a virus to a prior state. Virus protection tool 108 may also be configured to quarantine or delete data that has been affected by a virus.

For example, suppose that a virus attaches itself to a particular application program from application programs 112. This may include modifying the particular application program to include the executable code of the virus, so that the virus code is executed when the particular application program is executed. Upon detecting that the particular application program has been infected by a virus, virus protection tool 108 attempts to repair the particular application program by undoing the changes made to the particular application program by the virus. This would restore the particular application program to a prior state before MFP 100 was infected by the virus.

If virus protection tool 108 is unable to repair the particular application program, then the virus protection tool 108 either quarantines or deletes the particular application program. Virus protection tool 108 quarantines the particular application program by making the particular application program inaccessible to any hardware or software on MFP 100. For example, virus protection tool 108 may move the particular application program into a protected area of non-volatile storage 106 so that the particular application program cannot be accessed or executed.

Alternatively, virus protection tool 108 may delete the particular application program from MFP 100. Some deletion operations may remove only the name of the particular application program from a file attribute table (FAT) or other file management data file. Thus, after deleting the particular application program, the virus protection tool 108 may perform some additional functions to ensure that the particular application program is permanently deleted from MFP 100. For example, virus protection tool 108 may "scrub" a portion of non-volatile storage 106 where the particular application program was stored by overwriting the portion of non-volatile storage 106 with a specified value or pattern, such as 0H.

### V. RECORDATION AND NOTIFICATION FUNCTIONS PERFORMED IN RESPONSE TO DETECTING VIRAL INFECTION

The actions performed by virus protection tool 108 in response to determining that MFP 100 has been infected with a virus may also include a variety of recordation and notification functions. For example, virus protection tool 108 may generate recordation data that documents characteristics of the viral infection. This may include data that identifies a virus program or infected files on MFP 100. The recordation data may also document actions that occurred, for example, whether changes made by a virus were successfully or unsuccessfully undone whether program or data files were quarantined or deleted from MFP 100.

According to one embodiment of the invention, virus protection tool 108 is further configured to provide notification of actions that have occurred in response to virus protection tool 108 detecting that MFP 100 has been infected with a virus. According to one embodiment of the invention, virus protection tool 108 is configured to provide notification that MFP 100 has been infected by a virus program. The notification may identify a virus file or infected files on MFP 100. The notification may also specify actions that occurred, for example, whether changes made by a virus were successfully or unsuccessfully undone whether program or data files were quarantined or deleted from MFP 100. The manner of notification may vary depending upon the requirements of a particular implementation. For example, virus protection tool 108 may be configured to display one or more notification messages on GUI 110 to provide information directly to a user. As another example, virus protection tool 108 may generate and print a report on MFP 100 or fax the report to a specified location. As yet another example, virus protection tool 108 may generate and send a message or email to a specified location, such as a central server to alert administrative personnel of the condition.

The recordation and notification functions may be performed in addition to the other actions performed in response to virus protection tool 108 determining that MFP 100 has been infected with a virus.

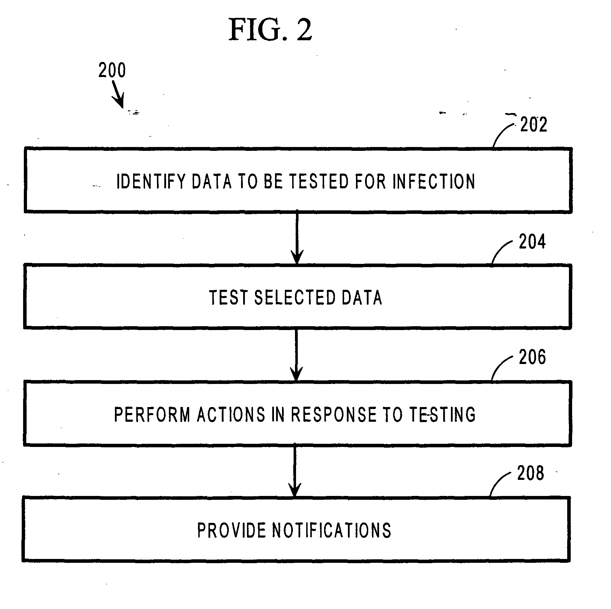

FIG. 2 is a flow diagram 200 that depicts a summary of various steps performed by MFP 100 in performing virus protection according to one embodiment of the invention. In step 202, MFP 100 selects data to be tested for virus infection. This data may be specified by configuration data, as described in more detail hereinafter. Alternatively, MFP 100 may select all data for testing. In step 204, the selected data is tested for infection by virus protection tool 108. In step 206, one or more actions are performed in response to the testing performed in step 204. In step 208, one or more notifications may be performed to indicate the testing that was performed, the results of the testing and any actions that were taken in response to the testing.

### VI. CONFIGURATION OF VIRUS PROTECTION TOOL

Virus protection tool 108 may be configured using a variety of techniques, depending upon the requirements of a particular application, and the invention is not limited to any particular technique. For example, virus protection tool 108 may be configured remotely by sending configuration data to MFP 100 that is used to configure MFP 100. Alternatively, virus protection tool 108 may be configured through GUI 110 on MFP 100.

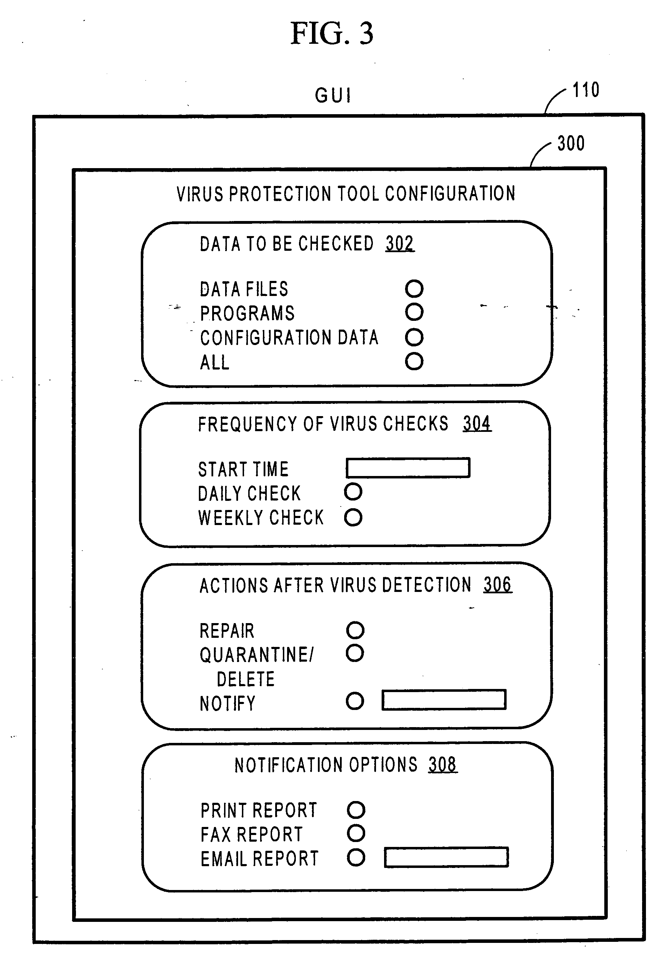

FIG. 3 is a block diagram that depicts configuring virus protection tool 108 through GUI 110. In this example, a virus protection tool configuration screen 300 is displayed on GUI 110 and provides for configuring of virus protection tool 108. Virus protection tool configuration screen 300 includes one or more user interface controls that allow a user to specify various configuration attributes for virus protection tool 108. In the present example, virus protection tool configuration screen 300 allows a user to specify the data to be checked 302 by virus protection tool 108, such as data files, programs, configuration data, or all data on MFP 100. Virus protection tool configuration screen 300 also allows a user to specify the frequency of virus checks 304 by specifying a start time and then selecting either a daily or weekly check, by selecting a corresponding radial button. Virus protection tool configuration screen 300 also allows a user to specify one or more actions to be taken after virus detection 306 by specifying one or more of repair, quarantine/delete and notify. Selecting the repair options causes virus protection tool 108 to attempt to undo changes made by a virus, so that infected data can be returned to a state prior to the changes being made by the virus. Selecting the quarantine/delete option causes virus protection tool 108 to quarantine or delete infected data, as described herein. Selecting the notify option causes virus protection tool 108 to provide notification of an infection as described herein. Notification options 308 allow a user to specify the form of notification, e.g., by one or more of printing a report, faxing a report or emailing a report to a specified email address.

The foregoing examples are meant to depict and describe some of the possible virus protection configuration data that may be used by virus protection tool 108. The actual configuration data used in any particular application may depend upon the requirements of the particular application and may vary from the foregoing examples. Thus, the invention is not limited to the example configuration data depicted and described herein.

### VII. REMOTE VIRUS PROTECTION

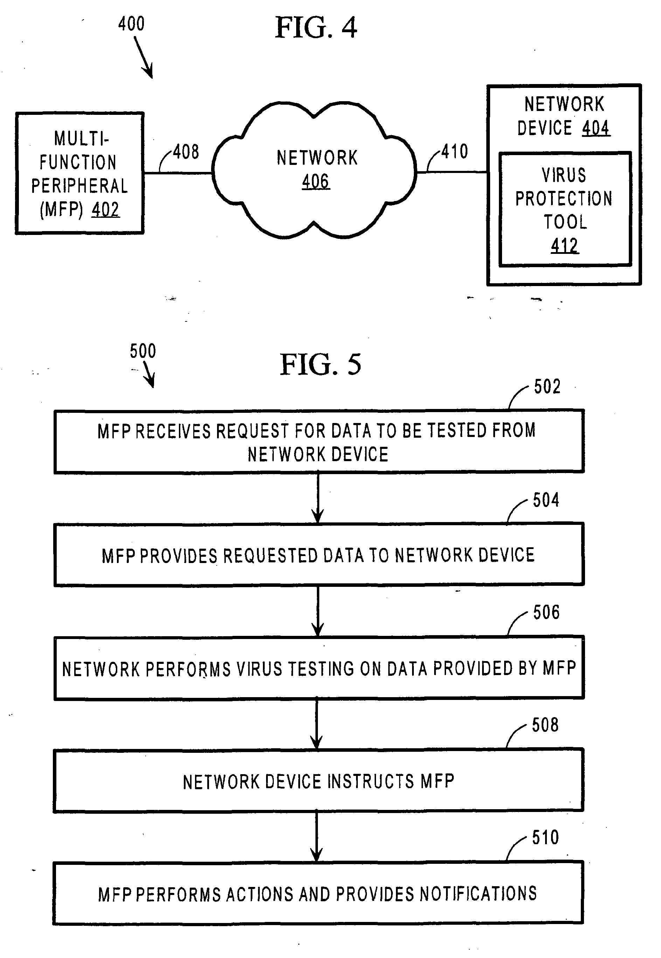

According to another embodiment of the invention, virus protection for MFPs is provided remotely. FIG. 4 is a block diagram that depicts an arrangement 400 for providing virus protection for MFPs remotely. Arrangement 400 includes an MFP 402 communicatively coupled to a network device 404 via a network 406 and links 408, 410. Network 406 and links 408, 410 may be implemented by any medium or mechanism that provides for the exchange of data between MFP 402 and network device 404. Examples of communications network 406 and links 408, 410 include, without limitation, one or more networks such as Local Area Networks (LANs), Wide Area Networks (WAN), Ethernets or the Internet, or one or more terrestrial, satellite or wireless links. Network 406 and links 408, 410 may be implemented using a variety of security techniques. For example, a virtual private network (VPN) may be used to provide secure communications between MFP 402 and network device 404. Any other technique may be used, depending upon the requirements of a particular application, and the invention is not limited to any particular security technique. Although embodiments of the invention are depicted in the figures and described in the context of network device 404 providing virus protection for a single MFP 402, the invention is not limited to this context and may provide virus protection for any number of MFPs.

Network device 404 may be any type of network device and the invention is not limited to any particular type of network device 404. Examples of network device 404 include, without limitation, a workstation, personal computer, server, router or gateway. In the present example, network device 404 is configured with a virus protection tool 412.

According to one embodiment of the invention, network device 404 is configured with a virus protection tool 412 that is used to provide remote virus protection for MFP 402. Network device 404 generates and sends a request for data to be tested to MFP 402 over network 406 and links 408, 410. In response to receiving the request, MFP 402 provides data to be tested to network device 404 over network 406 and links 408, 410. The data may include any type of data stored on MFP 402. Examples of data include, without limitation, data files, program code of any type, configuration data and any other type of data. Any amount of data may be sent from MFP 402 to network device 404 for testing. For example, particular data files, or portions thereof, may be selected for testing by network device 404. Similarly, a portion of configuration data may be selected for testing by network device 404.

Once received by network device 404, the data is tested for evidence of viral infection by virus protection tool 412. This may include virus protection tool examining the data using any available virus detection techniques. If the data received by network device 404 from MFP 402 is determined to be infected by a virus, then the data is disinfected. This may include, for example, removing one or more unauthorized instructions from the data and/or undoing changes made to the data by a virus program. Network device.404 then sends the repaired data to MFP 402 over network 406 and links 408, 410. MFP 402 replaces the infected data with the repaired data received from network device 404. There may be situations where network device 404 cannot repair infected data. In this situation, network device 404 sends a message to MFP 402 instructing MFP 402 to either quarantine or delete the infected data.

Upon completion of replacing, quarantining or deleting infected data, MFP 402 may generate and send a confirmation message to network device 404. The confirmation message may take many forms, depending upon the requirements of a particular application, and the invention is not limited to the confirmation message taking any particular form. For example, MFP 402 may generate and provide an email message to network device 404 confirming that the infected data has been replaced, quarantined or deleted.

According to one embodiment of the invention, MFP 402 is also configured to provide notification of any actions taken by MFP 402 relating to virus protection performed by network device 404. For example, MFP 402 may be configured to generate a report and either print the report locally (on MFP 402) or fax the report to another location. As another example, MFP 402 may be configured to generate and send-a message or email to another location. The notifications generated and sent by MFP 402 may specify a variety of information, depending upon the requirements of a particular application, and the invention is not limited to any particular notification content. For example, a notification may specify what data was sent and when the data was sent to network device 404. The notification may also specify when a message was received from network device 404 and what the message specified. For example, the notification may include the contents of the message, such as whether network device 404 identified any virus infections and if so, what actions were requested by network device 404. The notification may also indicate any actions performed by MFP 402 in response to receiving the message from network device 404 and the status of those actions, e.g., whether the actions were successful. For example, a notification may indicate that a particular file was sent from MFP 402 to network device 404 at a particular time. The notification may also specify that a message was received from network device 404 at a particular time and that the message indicated that the particular file was determined to be infected and should be replaced by another file provided by network device. The notification may further specify that the particular file was deleted from MFP 402 and replaced by the other file at a particular time and whether the replacement was successful or not. Thus, a notification may indicate a timeline for events and actions that were performed by MFP 402.

FIG. 5 is a flow diagram 500 that depicts an approach for providing remote virus protection for an MFP according to an embodiment of the invention. In step 502, a particular MFP receives a request from a network device for data to be tested. In step 504, the particular MFP provides the requested data to the network device. In step 506, the network device performs virus testing on the data provided by the MFP. In step 508, the network device provides instructions to the MFP, for example, whether to replace the infected data on the MFP with repaired data provided by the network device, or whether to quarantine or delete the infected data. In step 510, the MFP performs the requested actions and provides notifications, if appropriate.

### VIII.INTRUDER DETECTION AND "CHECK ON SEND"

According to one embodiment of the invention, MFPs are configured to perform "intruder detection" by checking any data received by the MFPs for viruses. The data may be any type of data received by the MFPs, such as print jobs, configuration data, etc. For example, suppose that MFP 100 receives a print job over a network. Virus protection tool 108 on MFP 100 performs a virus check on the print job to determine whether the print job contains a virus. If it does, then MFP 100 does not process the print job as it normally would and instead, repairs, quarantines or deletes the data as described herein. MFPs may also be configured to provide notification in this situation. In the prior example, MFP 100 may generate and send a notification to the network device that sent the print job. The notification may identify the particular print job and provide information about the viral infection, which may be useful, for example, in disinfecting the network device that sent the print job.

According to one embodiment of the invention, MFPs are configured to perform "check on send" by performing virus checking any data that is to be sent from the MFPs to other locations. For example, suppose that a particular MFP has generated an email that is to be sent to a network device over a network. Prior to sending the email, the particular MFP performs virus checking on the email to determine whether the email is infected. This might occur, for example, if an email program on the particular MFP had previously been infected with a virus. If the email is determined to be infected, then the email is not sent. The particular MFP may repair, quarantine or delete the email as described herein. The particular MFP may also generate and send a notification indicating that an email was infected and provide details of the infection. This information may aid administrative personnel in addressing the infection. Furthermore, MFPs may perform virus checking of other data in response to detecting a virus infection during a "check on send" procedure. For example, in response to detecting than an email has been infected, a particular MFP may automatically perform a virus check of all data on the particular MFP. This may be particularly useful, for example, if a large amount of time has elapsed since the last virus check.

### IX. IMPLEMENTATION MECHANISMS

Providing virus protection for MFPs as described herein is less labor intensive than prior approaches since MFPs may be configured with their own virus protection tool that automatically checks the MFPs for viruses. In this manner, MFPs can check themselves for the presence of a virus and report any problems to an administrator or server.

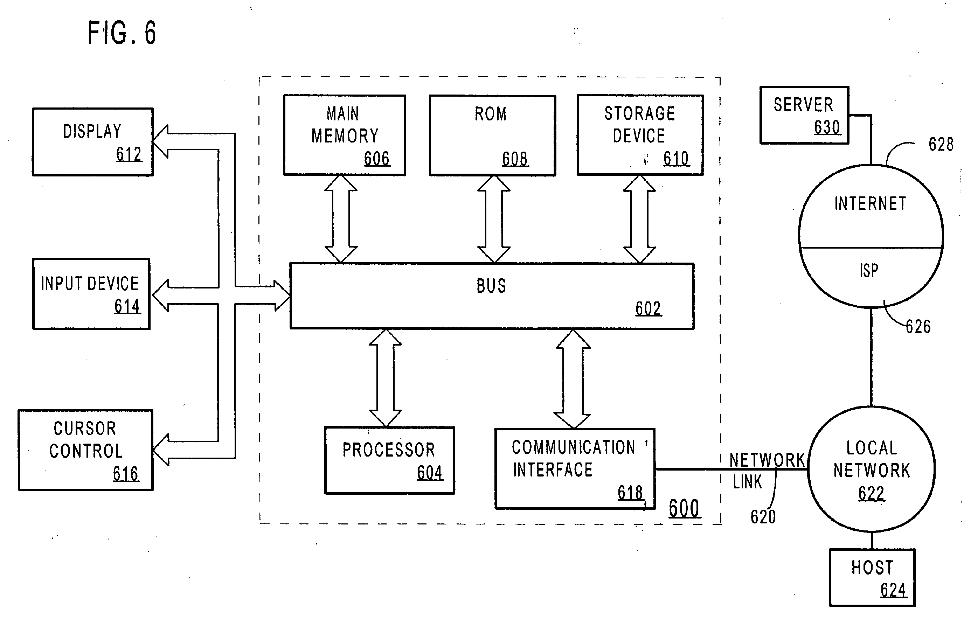

Figure 6 is a block diagram that illustrates a computer system 600 upon which an embodiment of the invention may be implemented. Computer system 600 includes a bus 602 or other communication mechanism for communicating information, and a processor 604 coupled with bus 602 for processing information. Computer system 600 also includes a main memory 606, such as a random access memory (RAM) or other dynamic storage device, coupled to bus 602 for storing information and instructions to be executed by processor 604. Main memory 606 also may be used for storing temporary variables or other intermediate information during execution of instructions to be executed by processor 604. Computer system 600 further includes a read only memory (ROM) 608 or other static storage device coupled to bus 602 for storing static information and instructions for processor 604. A storage device 610, such as a magnetic disk or optical disk, is provided and coupled to bus 602 for storing information and instructions.

Computer system 600 may be coupled via bus 602 to a display 612, such as a cathode ray tube (CRT), for displaying information to a computer user. An input device 614, including alphanumeric and other keys, is coupled to bus 602 for communicating information and command selections to processor 604. Another type of user input device is cursor control 616, such as a mouse, a trackball, or cursor direction keys for communicating direction information and command selections to processor 604 and for controlling cursor movement on display 612. This input device typically has two degrees of freedom in two axes, a first axis (e.g., x) and a second axis (e.g., y), that allows the device to specify positions in a plane.

The invention is related to the use of computer system 600 for implementing the techniques described herein. According to one embodiment of the invention, those techniques are performed by computer system 600 in response to processor 604 executing one or more sequences of one or more instructions contained in main memory 606. Such instructions may be read into main memory 606 from another machine-readable medium, such as storage device 610. Execution of the sequences of instructions contained in main memory 606 causes processor 604 to perform the process steps described herein. In alternative embodiments, hard-wired circuitry may be used in place of or in combination with software instructions to implement the invention. Thus, embodiments of the invention are not limited to any specific combination of hardware circuitry and software.

The term "machine-readable medium" as used herein refers to any medium that participates in providing data that causes a machine to operation in a specific fashion. In an embodiment implemented using computer system 600, various machine-readable media are involved, for example, in providing instructions to processor 604 for execution. Such a medium may take many forms, including but not limited to, non-volatile media, volatile media, and transmission media. Non-volatile media includes, for example, optical or magnetic disks, such as storage device 610. Volatile media includes dynamic memory, such as main memory 606. Transmission media includes coaxial cables, copper wire and fiber optics, including the wires that comprise bus 602. Transmission media can also take the form of acoustic or light waves, such as those generated during radio wave and infrared data communications.

Common forms of machine-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer-can read.

Various forms of machine-readable media may be involved in carrying one or more sequences of one or more instructions to processor 604 for execution. For example, the instructions may initially be carried on a magnetic disk of a remote computer. The remote computer can load the instructions into its dynamic memory and send the instructions over a telephone line using a modem. A modem local to computer system 600 can receive the data on the telephone line and use an infrared transmitter to convert the data to an infrared signal. An infrared detector can receive the data carried in the infrared signal and appropriate circuitry can place the data on bus 602. Bus 602 carries the data to main memory 606, from which processor 604 retrieves and executes the instructions. The instructions received by main memory 606 may optionally be stored on storage device 610 either before or after execution by processor 604.

Computer system 600 also includes a communication interface 618 coupled to bus 602. Communication interface 618 provides a two-way data communication coupling to a network link 620 that is connected to a local network 622. For example, communication interface 618 may be an integrated services digital network (ISDN) card or a modem to provide a data communication connection to a corresponding type of telephone line. As another example, communication interface 618 may be a local area network (LAN) card to provide a data communication connection to a compatible LAN. Wireless links may also be implemented. In any such implementation, communication interface 618 sends and receives electrical, electromagnetic or optical signals that carry digital data streams representing various types of information.

Network link 620 typically provides data communication through one or more networks to other data devices. For example, network link 620 may provide a connection through local network 622 to a host computer 624 or to data equipment operated by an Internet Service Provider (ISP) 626. ISP 626 in turn provides data communication services through the worldwide packet data communication network now commonly referred to as the "Internet" 628. Local network 622 and Internet 628 both use electrical, electromagnetic or optical signals that carry digital data streams. The signals through the various networks and the signals on network link 620 and through communication interface 618, which carry the digital data to and from computer system 600, are exemplary forms of carrier waves transpiorting the information.

Computer system 600 can send messages and receive data, including program code, through the network(s), network link 620 and communication interface 618. In the Internet example, a server 630 might transmit a requested code for an application program through Internet 628, ISP 626, local network 622 and communication interface 618. The received code may be executed by processor 604 as it is received, and/or stored in storage device 610, or other non-volatile storage for later execution. In this manner, computer system 600 may obtain application code in the form of a carrier wave.

In the foregoing specification, embodiments of the invention have been described with reference to numerous specific details that may vary from implementation to implementation. Thus, the sole and exclusive indicator of what is, and is intended by the applicants to be, the invention is the set of claims that issue from this application, in the specific form in which such claims issue, including any subsequent correction. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. A multi-function peripheral device comprising:
a virus protection process configured to
detect that one or more unauthorized instructions have been stored on the multi-function peripheral; and
in response to detecting that one or more unauthorized instructions have been stored on the multi-function peripheral, perform one or more actions to address the one or more unauthorized instructions that have been stored on the multi-function peripheral.

2. The multi-function peripheral device as recited in Claim 1, wherein the virus protection process is configured to detect that one or more unauthorized instructions have been stored on the multi-function peripheral by periodically examining, according to specified configuration criteria, data stored on the multi-function peripheral to determine whether the data has been modified in an unauthorized manner.

3. The multi-function peripheral device as recited in Claim 1 or 2, wherein the virus protection process is configured to detect that one or more unauthorized instructions have been stored on the multi-function peripheral by examining and detecting that one or more data files stored on the multi-function peripheral have been modified.

4. The multi-function peripheral device as recited in any one of the preceding claims, wherein the virus protection process is configured to detect that one or more unauthorized instructions have been stored on the multi-function peripheral by examining and detecting that program code stored on the multi-function peripheral has been modified.

5. The multi-function peripheral device as recited in any one of the preceding claims, wherein the virus protection process is configured to detect that one or more unauthorized instructions have been stored on the multi-function peripheral by examining and detecting that configuration data stored on the multi-function peripheral has been modified.

6. The multi-function peripheral device as recited in any one of the preceding claims, wherein the virus protection process is configured to examine data stored on a non-volatile memory of the multi-function peripheral.

7. The multi-function peripheral device as recited in any one of the preceding claims, wherein the virus protection process is configured to examine data stored in a volatile memory of the multi-function peripheral.

8. The multi-function peripheral device as recited in any one of the preceding claims, wherein the virus protection process is further configured to undo changes made as a result of execution of the one or more unauthorized instructions.

9. The multi-function peripheral device as recited in any one of the preceding claims, wherein the virus protection process is further configured to
determine whether particular data stored on the multi-function peripheral can be restored to a prior state; and
in response to determining that the particular data cannot be restored to the prior state, then delete the particular data from the multi-function peripheral.

10. The multi-function peripheral device as recited in any one of the preceding claims, wherein the virus protection process is further configured to render the one or more instructions inaccessible and unexecutable on the multi-function peripheral.

11. The multi-function peripheral device as recited in any one of the preceding claims, wherein the virus protection process is further configured to notify a user via a graphical user interface on the multi-function peripheral that the storage of the one or more unauthorized instructions on the multi-function peripheral has been detected.

12. The multi-function peripheral device as recited in any one of the preceding claims, wherein the virus protection process is further configured to notify a user by printing a report on the multi-function peripheral that indicates that the storage of the one or more unauthorized instructions on the multi-function peripheral has been detected.

13. The multi-function peripheral device as recited in any one of the preceding claims, wherein the virus protection process is further configured to provide notification via an email that the storage of the one or more unauthorized instructions on the multi-function peripheral has been detected.

14. The multi-function peripheral device as recited in any one of the preceding claims, wherein the virus protection process is further configured to provide notification via a facsimile that the storage of the one or more unauthorized instructions on the multi-function peripheral has been detected.

15. The multi-function peripheral device as recited in any one of the preceding claims, wherein the multi-function peripheral is configured to receive, over a network, data used by the virus protection process to detect that the one or more unauthorized instructions have been stored on the multi-function peripheral.

16. A multi-function peripheral device comprising:
a memory storing instructions which, when processed by one or more processors, causes the multi-function peripheral to perform the steps of
detect that a request for data to be analyzed for viral infection has been received over a network from a network device; and
in response to detecting receipt of the request, providing data from the multi-function peripheral device to the network device over the network.

17. The multi-function peripheral device as recited in Claim 16, wherein providing data from the multi-function peripheral device to the network device over the network includes providing one or more data files to the network device over the network.

18. The multi-function peripheral device as recited in Claim 16 or 17, wherein providing data from the multi-function peripheral device to the network device over the network includes providing configuration data to the network device over the network.

19. The multi-function peripheral device as recited in any one of Claims 16 to 18, wherein the memory stores additional instructions which, when processed by the one or more processors, cause the multi-function peripheral to perform the steps of:
receive replacement data from the network device that has been disinfected; and
replace the data on the multi-function peripheral device with the replacement data.

20. The multi-function peripheral device as recited in Claim 19, wherein the memory stores other instructions which, when processed by the one or more processors, cause the multi-function peripheral to after replacing the data on the multi-function peripheral device with the replacement data, generate and send a confirmation message to the network device.

21. The multi-function peripheral device as recited in Claim 19 or 20, wherein the memory stores other instructions which, when processed by the one or more processors, cause the multi-function peripheral to, after replacing the data on the multi-function peripheral device with the replacement data, generate a report and either print the report at the multi-function peripheral or fax the report to another location.

22. The multi-function peripheral device as recited in any one of Claims 16 to 21, wherein the memory stores additional instructions which, when processed by the one or more processors, cause the multi-function peripheral to perform the steps of:
receive a request from the network device for the multi-function peripheral to quarantine or delete at least a portion of the data that was sent from the multi-function peripheral device to the network device; and
in response to receiving the request from the network device to quarantine or delete at least a portion of the data that was sent to the network device, quarantine or delete the at least a portion of the data that was sent from the multi-function peripheral device to the network device.

23. A multi-function peripheral device comprising:
a virus protection process configured to, upon receipt of data by the multi-function peripheral,
examine the data to determine whether the data contains one or more unauthorized instructions; and
in response to detecting that the data contains one or more unauthorized instructions, perform one or more actions.

24. The multi-function peripheral recited in Claim 23, wherein the virus protection process is further configured to prevent the data from being stored on the multi-function peripheral.

25. The multi-function peripheral recited in Claim 23 or 24, wherein the virus protection process is further configured to generate and provide a notification that the multi-function peripheral received the data containing one or more unauthorized instructions.

26. The multi-function peripheral recited in any one of Claims 23 to 25, wherein the one or more unauthorized instructions are unauthorized executable program code.

27. A multi-function peripheral device comprising:
a virus protection process configured to, prior to sending data from the multi-function peripheral to a network device over a network,
examine the data to determine whether the data contains one or more unauthorized instructions; and
in response to determining that the data contains one or more unauthorized instructions, perform one or more actions.

28. The multi-function peripheral recited in Claim 27, wherein the one or more actions include not sending the data to the network device.

29. The multi-function peripheral recited in Claim 27 or 28, wherein the one or more actions include generating and providing a notification that indicates that the multi-function peripheral has the data that has been infected by a virus.

30. The multi-function peripheral recited in any one of Claims 27 to 29, wherein the one or more unauthorized instructions are unauthorized executable program code.

31. The multi-function peripheral device as recited in any one of Claims 27 to 30, wherein the virus protection process is configured to detect that one or more unauthorized instructions have been stored on the multi-function peripheral by examining and detecting that the data has been modified.

32. The multi-function peripheral device as recited in any one of Claims 27 to 31, wherein the data is stored on a non-volatile memory of the multi-function peripheral.

33. The multi-function peripheral device as recited in any one of claims 27 to 31, wherein the data is stored in a volatile memory of the multi-function peripheral.

34. The multi-function peripheral device as recited in any one of claims 27 to 31, wherein the virus protection process is further configured to undo changes made as a result of execution of the one or more unauthorized instructions.

35. The multi-function peripheral device as recited in any one of Claims 27 to 34, wherein the virus protection process is further configured to
determine whether the data stored on the multi-function peripheral can be restored to a prior state; and
in response to determining that the data cannot be restored to the prior state, then delete the data from the multi-function peripheral-.

36. The multi-function peripheral device as recited in any one of claims 27 to 35, wherein the virus protection process is further configured to render the data inaccessible on the multi-function peripheral.

37. The multi-function peripheral device as recited in any one of claims 27 to 36, wherein the virus protection process is further configured to notify a user via a graphical user interface on the multi-function peripheral that the data contains one or more unauthorized instructions.

38. The multi-function peripheral device as recited in any one of claims 27 to 37, wherein the virus protection process is further configured to notify a user by printing a report on the multi-function peripheral that indicates that the data contains one or more unauthorized instructions.

39. The multi-function peripheral device as recited in any one of claims 27 to 38, wherein the virus protection process is further configured to provide notification via an email that the data contains one or more unauthorized instructions.

40. The multi-function peripheral device as recited in any one of claims 27 to 39, wherein the virus protection process is further configured to provide notification via a facsimile that the data contains one or more unauthorized instructions.

41. The multi-function peripheral device as recited in any one of claims 27 to 40, wherein the multi-function peripheral is configured to receive, over a network, data used by the virus protection process to detect that the one or more unauthorized instructions have been stored on the multi-function peripheral.
